(19) Europäisches Patentamt
European Patent Office
Office européen des brevets

(11) **EP 4 068 031 A1**

(12) **EUROPEAN PATENT APPLICATION**

(43) Date of publication:
**05.10.2022 Bulletin 2022/40**

(21) Application number: **22164728.2**

(22) Date of filing: **28.03.2022**

(51) International Patent Classification (IPC):
*G05B 23/02* *(2006.01)*

(52) Cooperative Patent Classification (CPC):
**G05B 23/0275; G05B 23/0278; G05B 23/0281**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 CN 202110329887**

(71) Applicants:
• **Beijing Interstellar Glory Space
Technology Co., Ltd.
Beijing 100032 (CN)**
• **Beijing Interstellar Glory Technology LLC
Beijing 100176 (CN)**

(72) Inventors:
• ZU, Yunyu
Beijing, 100032 (CN)
• PENG, Xiaobo
Beijing, 100032 (CN)
• CHENG, Shuguang
Beijing, 100032 (CN)
• ZHAO, Yeni
Beijing, 100032 (CN)

(74) Representative: **Schwarz & Partner Patentanwälte
GmbH
Patentanwälte
Wipplingerstraße 30
1010 Wien (AT)**

(54) **HEALTH ASSESSMENT METHOD FOR AN AIRCRAFT SYSTEM AND APPARATUS THEREFOR**

(57)     The present invention discloses an aircraft system and a health assessment method and apparatus therefor. The health assessment method for an aircraft system comprises: acquiring operational parameters of a subsystem to be assessed in the aircraft system; determining a failure mode corresponding to an abnormal parameter in the operational parameters and determining criticality of the failure mode according to an FMECA assessment result; and determining a health condition of the subsystem to be assessed according to criticality of all failure modes in the subsystem to be assessed; in this way, real-time acquisition of failure data can be accomplished during flight of an aircraft, and the FMECA assessment result is extended to the whole life cycle of the aircraft system, thereby assessing the health condition of the subsystem to be assessed in the aircraft system during the flight of the aircraft, which satisfies the need for safe flight of the aircraft system, and improves the safety of the aircraft.

Fig. 1

## Description

### Field

The present invention relates to the technical field of prediction and health management of aircraft systems, and in particular to an aircraft system and a health assessment method and apparatus therefor.

### Background

There are two states throughout the service life of a reusable aircraft: an operation state and a maintenance state. During operation of the reusable aircraft, health assessment management can deal with common failures timely and avoid major accidents, thereby improving the reliability and utilization rate of the aircraft and maximally ensuring normal accomplishment of a flight mission. During maintenance on the ground, by developing a more reasonable maintenance plan and scheme, health assessment management can reduce the time and resources spent on ground inspection and repair, decrease maintenance costs, and reduce preparation time of the aircraft on the ground. Health assessment management technology can also achieve comprehensive health status monitoring on important aircraft components and the entire system, and implement self-repairing, mission degradation, or advance preparation of necessary maintenance resources for the aircraft, if necessary, thereby reducing costs of the whole life cycle. Therefore, aircraft health assessment management technology has an important theoretical significance and application value for the development of aircrafts, and has become an inevitable trend in technological development of the aerospace industry.

During failure detection, failure diagnosis and life prediction of the reusable aircraft system as a complex system, the operational status of the reusable aircraft system is usually determined by observing characteristics such as the magnitudes and variation trends of measurement component parameter data values. Optimal data representations and changes thereof are determined by studying data characteristics and change rules during testing and operation of the aircraft system. For example, several parameters and parameter ranges obtained by feature parameter extraction and data fusion, curve fluctuation modes, change characteristics of curve fluctuation, etc. Then a fuzzy membership function of each parameter is determined by using an appropriate method, the weight of each different parameter is determined according to its degree of importance in the whole reusable aircraft system and subsystems, and a parameter set and an assessment model required for health assessment are built, thereby assessing the degree of health of the reusable aircraft system by using the parameters of the reusable aircraft system in actual flight and maintenance.

FMECA consists of two relatively independent tasks: failure mode and effect analysis (FMEA) and criticality analysis (CA). When a failure of the reusable aircraft system occurs, a health index can be calculated by using a calculated criticality value.

Analysis in a traditional FMECA process is performed in a static condition, and the criticality and health index thus obtained by probability calculation represent a long-term prediction of the status of the reusable aircraft system, including ground maintenance and storage stages of the reusable aircraft system. However, during actual use of the reusable aircraft system, system health conditions continuously change in a dynamic process, so the possibility of a failure increases, which causes a risk.

If a failure occurs during flight of the reusable aircraft, the reliability and robustness of the reusable aircraft system itself will be greatly affected. Thus, the traditional method of determining the health degree of the reusable aircraft system in a static mode will no longer be applicable. Therefore, FMECA needs to be improved so as to be applicable to a dynamic process of the reusable aircraft system.

### Summary

In view of this, embodiments of the present invention provide an aircraft system and a health assessment method and apparatus therefor during flight.

According to a first aspect, an embodiment of the present invention provides a health assessment method for an aircraft system, including:

acquiring operational parameters of a subsystem to be assessed in the aircraft system;

determining a failure mode corresponding to an abnormal parameter in the operational parameters and determining criticality of the failure mode according to an FMECA assessment result; and

determining a health condition of the subsystem to be assessed according to criticality of all failure modes in the subsystem to be assessed.

According to the health assessment method for an aircraft system provided in the embodiment of the present invention, operational parameters of a subsystem to be assessed in the aircraft system are acquired; a failure mode corresponding to an abnormal parameter in the operational parameters is determined and criticality of the failure mode is determined according to an FMECA assessment result; and a health condition of the subsystem to be assessed is determined according to criticality of all failure modes in the subsystem to be assessed; in this way, real-time acquisition of failure data can be accomplished during flight of an aircraft, and the FMECA assessment result is extended to the whole life cycle of the aircraft system, thereby assessing the health condition of the subsystem to be assessed in the aircraft system during the flight of the aircraft, which satisfies the need for safe flight of the aircraft system, and improves the safety of the aircraft.

In conjunction with the first aspect, in a first implementation of the first aspect, the subsystem to be assessed includes one or more of: a control subsystem of the aircraft system, a propulsion subsystem of the aircraft system, and a communication subsystem of the aircraft system.

In conjunction with the first aspect, in a second implementation of the first aspect, after determining criticality of the failure mode according to an FMECA assessment result, the method further includes: determining severity of the failure mode according to the criticality of the failure mode and updating the FMECA assessment result according to the severity of the failure mode.

In conjunction with the first aspect, in a third implementation of the first aspect, determining criticality of the failure mode according to an FMECA assessment result includes:

calculating the criticality of the failure mode by using a preset first formula; the first formula is

$$C_{mj} = \lambda_p d_j \beta_j t$$

,

where $j$ is the failure mode, $\lambda_p$ is a failure rate, $d_j$ is a failure mode frequency ratio, $\beta_j$ is a failure effect probability, $t$ is operating time, and $C_{mj}$ is the criticality of the failure mode $j$.

In conjunction with the first aspect, in a fourth implementation of the first aspect, determining a health condition of the subsystem to be assessed according to criticality of all failure modes in the subsystem to be assessed includes:

determining the health condition of the subsystem to be assessed by using a preset second formula according to criticality of all failure modes in the subsystem to be assessed;
the second formula is

$$E_i = 1 - \sum_{j=i}^{k} C_{mj}$$

,

where $E_i$ represents a health index of the subsystem i to be assessed, and $C_{mj}$ is criticality of a failure mode $j$.

In conjunction with the first aspect, in a fifth implementation of the first aspect, in the case of at least two subsystems to be assessed, the method further includes determining a health condition of the aircraft system by using a preset third formula according to the health conditions of the subsystems to be assessed; the third formula is:

$$H = a \left[ \sum_{i=1}^{n} w_i E_i \right]$$

,

where H is a health condition index of the aircraft system, $\alpha$ is a defined penalty function, $W_i$ is a weight coefficient for the health condition of each subsystem i to be assessed, and $E_i$ represents a health index of the subsystem i to be assessed.

According to a second aspect, an embodiment of the present invention provides a health assessment apparatus for an aircraft system, including:

an acquisition module configured to acquire operational parameters of a subsystem to be assessed in an aircraft;

a criticality calculation module configured to determine a failure mode corresponding to an abnormal parameter in the operational parameters and determine criticality of the failure mode according to an FMECA assessment result; and

a health condition determination module configured to determine a health condition of the subsystem to be assessed according to criticality of all failure modes in the subsystem to be assessed.

In conjunction with the second aspect, in a first implementation of the second aspect, the health assessment apparatus for an aircraft system further includes: an update module configured to, after determining the criticality of the failure mode, determine severity of the failure mode according to the criticality of the failure mode and update the FMECA assessment result according to the severity of the failure mode and/or information related to the failure mode.

According to a third aspect, an embodiment of the present invention provides an aircraft system, including a memory and a processor, wherein the memory and the processor are communicatively connected to each other, and the memory stores computer instructions, which are executed by the processor to perform the health assessment method for an aircraft system in the first aspect or in any implementation of the first aspect.

According to a fourth aspect, an embodiment of the present invention provides a computer-readable storage medium, which stores computer instructions configured to cause a computer to execute the health assessment method for an aircraft system in the first aspect or in any implementation of the first aspect.

**Brief Description of the Drawings**

Features and advantages of the present invention will be understood more clearly with reference to the accompanying drawings, which are illustrative and should not be construed as limiting the present invention. In the drawings:

Fig. 1 is a flow diagram of a health assessment method for an aircraft system in Embodiment 1 of the present invention;

Fig. 2 is a flow diagram of improved FMECA of the aircraft system in Embodiment 1 of the present invention; and

Fig. 3 is a structural diagram of a health assessment apparatus for an aircraft system in Embodiment 2 of the present invention.

**Detailed Description of the Embodiments**

To make the objects, technical solutions and advantages of the embodiments of the present invention clearer, the technical solutions in the embodiments of the present invention will be described below clearly and completely in conjunction with the accompanying drawings in the embodiments of the present invention. Obviously, the described embodiments are only a part of the embodiments of the present invention, and not all the embodiments. All other embodiments obtained by those skilled in the art based on the embodiments in the present invention without creative work fall into the protection scope of the present invention.

Embodiment 1

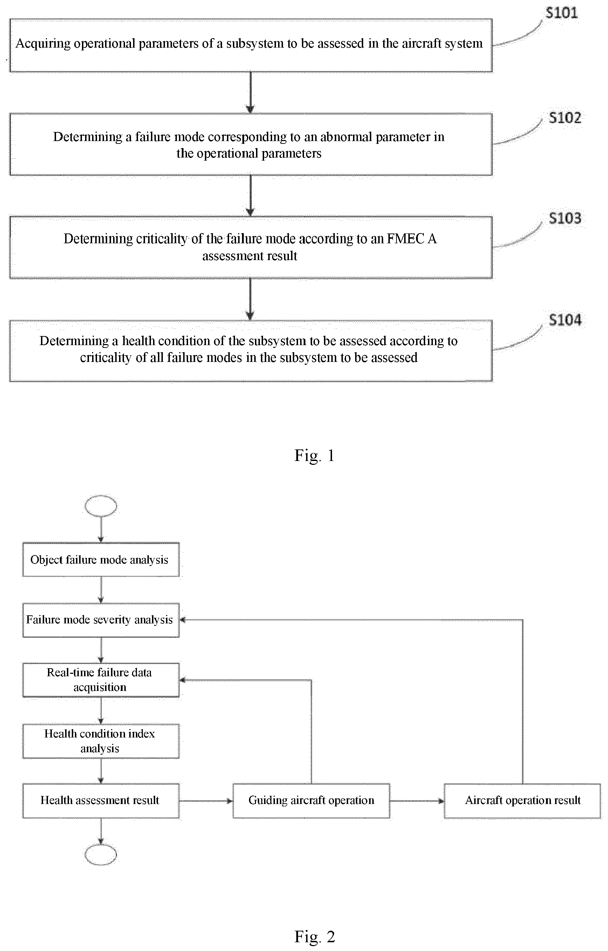

Embodiment 1 of the present invention provides a health assessment method for an aircraft system. Fig. 1 is a flow diagram of a health assessment method for an aircraft system in Embodiment 1 of the present invention. As shown in Fig. 1, the health assessment method for an aircraft system in Embodiment 1 of the present invention includes the following steps:

S101: acquiring operational parameters of a subsystem to be assessed in the aircraft system.

As a specific implementation, in Embodiment 1 of the present invention, the subsystem to be assessed includes one or more of: a control subsystem of the aircraft system, a propulsion subsystem of the aircraft system, and a communication subsystem of the aircraft system.

S102: determining a failure mode corresponding to an abnormal parameter in the operational parameters. In other words, an abnormal parameter is selected from the operating parameters, and a failure mode corresponding to the abnormal parameter is determined.

In Embodiment 1 of the present invention, determining an operating parameter as an abnormal parameter and determining a failure mode corresponding to the abnormal parameter may be implemented by any method of the prior art and will not be described herein.

S103: determining criticality of the failure mode according to an FMECA assessment result.

As a specific implementation, the criticality of the failure mode may be calculated by using a preset first formula; the first formula is

$$C_{mj} = \lambda_p d_j \beta_j t$$
,

where $j$ is the failure mode, $\lambda_p$ is a failure rate, $d_j$ is a failure mode frequency ratio, $\beta_j$ is a failure effect probability, $t$ is operating time, and $C_{mj}$ is the criticality of the failure mode $j$. It should be noted that in the first formula, the failure rate $\lambda_p$, the failure mode frequency ratio $d_j$, and the failure effect probability $\beta_j$ may be obtained from the FMECA assessment result.

S104: determining a health condition of the subsystem to be assessed according to criticality of all failure modes in the subsystem to be assessed.

As a specific implementation, determining a health condition of the subsystem to be assessed according to criticality of all failure modes in the subsystem to be assessed includes:

determining the health condition of the subsystem to be assessed by using a preset second formula according to criticality of all failure modes in the subsystem to be assessed;
the second formula is

$$E_i = 1 - \sum_{j=i}^{k} C_{mj}$$
,

where $E_i$ represents a health index of the subsystem i to be assessed, and $C_{mj}$ is criticality of a failure mode $j$.

As a specific implementation, in the case of at least two subsystems to be assessed, the method further includes determining a health condition of the aircraft system by using a preset third formula according to the health conditions of the subsystems to be assessed; the third formula is:

$$H = a \left[ \sum_{i=1}^{n} w_i E_i \right]$$
,

where H is a health condition index of the aircraft system, $\alpha$ is a defined penalty function, $W_i$ is a weight coefficient for the health condition of each subsystem i to be assessed, and $E_i$ represents a health index of the subsystem i to be assessed.

As a specific implementation, after determining the criticality of the failure mode, the method further includes: determining severity of the failure mode according to the criticality of the failure mode and updating the FMECA assessment result according to the severity of the failure mode and/or information related to the failure mode.

Fig. 2 is a flow diagram of improved FMECA of the aircraft system in Embodiment 1 of the present invention. As shown in Fig. 2, in the improved FMECA, failure mode and effect analysis (FMEA) includes object failure mode analysis and failure mode severity analysis; and criticality analysis (CA) includes real-time failure data acquisition, calculation of the criticality of the failure mode, and further health condition index analysis to obtain the health assessment result, thereby guiding the flight of the aircraft. Further, the severity of the failure mode may be determined according to the criticality of the failure mode, the related information (such as the failure mode frequency ratio, and the failure effect probability) of the failure mode is acquired, and the severity of the failure mode and/or the related information of the failure mode are updated, by using an actual operation result of the aircraft, as a data source for updating the FMECA assessment result.

FMEA means that the effect of each possible failure mode of the reusable aircraft system on the subsystem is analyzed, and each failure mode is classified by its severity. Severity is a measure of the degree to which the failure mode of the subsystem causes a serious consequence for the operation of the subsystem, and a severity category is a measure specified for the worst potential consequence for a subsystem failure. Generally, there are four categories: Category 1: catastrophic; Category 2: severe; Category 3: relatively severe; and Category 4: slight. Specifically, the severity of the failure mode may be determined according to the criticality of the failure mode.

FMEA is the basis of the whole FMECA process. In the analysis, characteristics of each component of the subsystem must be taken into close consideration, and a hardware FMEA method and a functional FMEA method are combined to obtain a specific and comprehensive analysis result, so as to be ready for the next step of CA. For the reusable aircraft system, which includes subsystems such as a control subsystem, a propulsion subsystem, and a communication subsystem, the health conditions of the aircraft system and the aircraft subsystems can be assessed by extending FMECA.

Exemplarily, for the control subsystem and the propulsion subsystem of the reusable aircraft system, a liquid fuel engine (a thrust chamber, a flow regulating valve, a gas generator, an engine swing servo, etc.), an RCS engine, a grid rudder, a flight control computer, an engine controller and the like are included. According to the actual situation, during the use (flight) of the reusable aircraft, a failure of the control subsystem and the propulsion subsystem is usually caused by a failure of an operational mechanical component such as a valve and a servo, and a functional failure of the flight control computer may also lead to the failure of the control subsystem and the propulsion subsystem.

Typical failures of the control subsystem and the propulsion subsystem of the reusable aircraft system are analyzed, and severity of the failure of the control subsystem and the propulsion subsystem of the reusable aircraft system can be classified according to the failures. The higher the severity level, the smaller the number, and vice versa. The following table can be obtained.

Table 1 Typical failures of a reusable aircraft and severity thereof

| Serial number | Failure mode | Severity |
|---|---|---|
| 1 | Thrust reduction of one engine | 2 |
| 2 | Thrust loss of one engine | 1 |
| 3 | Thrust reduction of two engines | 2 |
| 4 | Thrust loss of two engines | 1 |
| 5 | Thrust reduction of three engines | 1 |
| 6 | Thrust loss of three engines | 1 |
| 7 | A grid rudder getting stuck (0 angle) | 2 |
| S | A grid rudder getting stuck (large angle) | 1 |
| 9 | Failure of one large-thrust RCS nozzle | 1 |
| 10 | Failure of one mid-thrust RCS nozzle | 2 |
| 11 | Failure of a small-thrust RCS nozzle | 3 |
| 12 | An engine servo mechanism getting stuck (0 angle) | 2 |
| 13 | An engine servo mechanism getting stuck (large angle) | 1 |
| 14 | RCS polarity error | 1 |
| 15 | An engine valve getting stuck (normally open) | 2 |
| 16 | An Engine valve getting stuck (normally closed) | 1 |
| 17 | Failure of an engine valve sensor | 1 |
| 18 | Failure of a temperature sensor of an engine thrust chamber | 4 |
| 19 | Failure of a temperature sensor of an engine thrust chamber | 4 |

(continued)

| Serial number | Failure mode | Severity |
|---|---|---|
| 20 | Failure of a timing board of a flight control computer | 1 |
| 21 | Failure of a timing board of a flight control computer | 4 |
| 22 | Failure of a CPU of an engine controller | 4 |
| 23 | Failure of a CPU of an engine controller | 1 |
| 24 | Communication failure of an engine controller | 3 |
| 25 | Power supply failure of an engine controller | 1 |

According to the health assessment method for an aircraft system provided in Embodiment 1 of the present invention, operational parameters of a subsystem to be assessed in the aircraft system are acquired; a failure mode corresponding to an abnormal parameter in the operational parameters is determined and criticality of the failure mode is determined according to an FMECA assessment result; and a health condition of the subsystem to be assessed is determined according to criticality of all failure modes in the subsystem to be assessed; in this way, real-time acquisition of failure data can be accomplished during flight of an aircraft, and the FMECA assessment result is extended to the whole life cycle of the aircraft system, thereby assessing the health condition of the subsystem to be assessed in the aircraft system during the flight of the aircraft, which satisfies the need for safe flight of the aircraft system, and improves the safety of the aircraft.

The health assessment result obtained by assessment will guide the operation of the reusable aircraft, and if the health assessment result of the reusable aircraft indicates a problem of the health condition of the reusable aircraft system or a subsystem thereof, fault-tolerant control can be performed during the flight or appropriate processing can be performed after the end of the flight to meet the reusable requirement.

An operation result of the reusable aircraft system will guide failure mode severity analysis of an improved FMECA method. A data statistical result of operation of the reusable aircraft system and its subsystems will be used as a source for failure mode severity analysis. Data of operation of the reusable aircraft system will also be used as an input source for its real-time failure data to enter a closed loop of the FMECA method.

It can be seen that in Embodiment 1 of the present invention, the FMECA health assessment can be extended to the whole life cycle of the reusable aircraft, such that the health assessment result can be used to improve the effectiveness of the health assessment itself, and its real-time health assessment characteristic improves the safety of the reusable aircraft

Embodiment 2

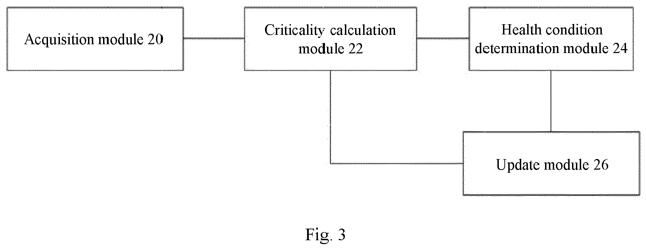

Embodiment 2 of the present invention provides a health assessment apparatus for an aircraft system. Fig. 3 is a structural diagram of a health assessment apparatus for an aircraft system in Embodiment 2 of the present invention. As shown in Fig. 3, the health assessment apparatus for an aircraft system in Embodiment 2 of the present invention includes an acquisition module 20, a criticality calculation module 22, and a health condition determination module 24.

Specifically, the acquisition module 20 is configured to acquire operational parameters of a subsystem to be assessed in an aircraft;

the criticality calculation module 22 is configured to determine a failure mode corresponding to an abnormal parameter in the operational parameters and determine criticality of the failure mode according to an FMECA assessment result; and
the health condition determination module 24 is configured to determine a health condition of the subsystem to be assessed according to criticality of all failure modes in the subsystem to be assessed.

Further, the health assessment apparatus for an aircraft system further includes an update module 26. After determining the criticality of the failure mode, the update module 26 is configured to determine severity of the failure mode according to the criticality of the failure mode and update the FMECA assessment result according to the severity of the failure mode and/or information related to the failure mode.

Specific details of the above-mentioned health assessment apparatus for an aircraft system may be understood by correspondingly referring to the corresponding related description and effects in the embodiments shown in Figs. 1 and 2, which will not be repeated here.

Embodiment 3

The embodiment of the present invention also provides an aircraft system, which may include a processor and a memory, wherein the processor and the memory may be connected via a bus or by other means.

The processor may be a central processing unit (CPU). The processor may also be other general-purpose processor, a digital signal processor (DSP), an application specific integrated circuit (ASIC), a field-programmable gate array (FPGA), or other programmable logic device, a discrete gate or transistor logic device, a discrete hardware component or other chip, or a combination of the above-mentioned various types of chips.

The memory, as a non-transitory computer-readable storage medium, may be used to store non-transitory software programs, non-transitory computer executable programs and modules, such as program instructions/modules corresponding to the health assessment method for an aircraft system in embodiments of the present invention (such as the acquisition module 20, the criticality calculation module 22, the health condition determination module 24 and the update module 26 shown in Fig. 3). The processor runs the non-transitory software programs, instructions and modules stored in the memory to execute various function applications of the processor and data processing, i.e., implementing the health assessment method for an aircraft system in the above method embodiment.

The memory may include a program storage area and a data storage area, wherein the program storage area may store an operating system and an application program required for at least one function; and the data storage area may store data created by the processor, and the like. In addition, the memory may include a high-speed random access memory, and may also include a non-transitory memory, such as at least one magnetic disk storage device, flash memory device, or other non-transitory solid-state storage device. In some embodiments, the memory optionally includes memories remotely provided from the processor, and these remote memories may be connected to the processor through a network. Examples of the network described above include, but are not limited to, the Internet, an intranet, a local area network, a mobile communication network and combinations thereof.

The one or more modules are stored in the memory, and when executed by the processor, execute the health assessment method for an aircraft system in the embodiments as shown in Fig. 1.

Specific details of the above-mentioned aircraft system may be understood by correspondingly referring to the corresponding related description and effects in the embodiments shown in Figs. 1 to 3, which will not be repeated here.

Those skilled in the art can understand that all or part of the processes in the methods in the above embodiments may be implemented by relevant hardware instructed by a computer program, and the program may be stored in a computer-readable storage medium. The program, when executed, may include the processes of the above method embodiments. The storage medium may be a magnetic disk, an optical disk, a read-only memory (ROM), a random access memory (RAM), a flash memory, a hard disk drive (HDD), a solid-state drive (SSD), or the like; and the storage medium may also include a combination of the aforementioned types of storage.

Although the embodiments of the present invention are described with reference to the accompanying drawings, those skilled in the art can make various modifications and variations without departing from the spirit and scope of the present invention, and such modifications and variations fall within the scope of the appended claims.

**Claims**

1.  A health assessment method for an aircraft system, comprising:

    acquiring operational parameters of a subsystem to be assessed in the aircraft system;
    determining a failure mode corresponding to an abnormal parameter in the operational parameters and determining criticality of the failure mode according to an FMECA assessment result; and
    determining a health condition of the subsystem to be assessed according to criticality of all failure modes in the subsystem to be assessed;
    after determining criticality of the failure mode according to an FMECA assessment result, the method further comprises:

       determining severity of the failure mode according to the criticality of the failure mode and updating the FMECA assessment result according to the severity of the failure mode and/or information related to the failure mode;
       determining criticality of the failure mode according to an FMECA assessment result comprises:

           calculating the criticality of the failure mode by using a preset first formula; the first formula is:

$$C_{mj} = \lambda_p d_j \beta_j t$$

,

where $j$ is the failure mode, $\lambda_p$ is a failure rate, $d_j$ is a failure mode frequency ratio, $\beta_j$ is a failure effect probability, $t$ is operating time, and $C_{mj}$ is the criticality of the failure mode.

2. The method according to claim 1, wherein the subsystem to be assessed comprises one or more of: a control subsystem of the aircraft system, a propulsion subsystem of the aircraft system, and a communication subsystem of the aircraft system.

3. The method according to claim 1, wherein determining a health condition of the subsystem to be assessed according to criticality of all failure modes in the subsystem to be assessed comprises:

determining the health condition of the subsystem to be assessed by using a preset second formula according to criticality of all failure modes in the subsystem to be assessed; the second formula is:

$$E_i = 1 - \sum_{j=i}^{k} C_{mj}$$

,

where $E$, represents a health index of the subsystem i to be assessed, and $C_{mj}$ is criticality of a failure mode $j$.

4. The method according to claim 1, wherein in the case of at least two subsystems to be assessed, the method further comprises determining a health condition of the aircraft system by using a preset third formula according to the health conditions of the subsystems to be assessed; the third formula is:

$$H = a \left[ \sum_{i=1}^{n} w_i E_i \right]$$

,

where H is a health condition index of the aircraft system, $\alpha$ is a defined penalty function, $W_i$ is a weight coefficient for the health condition of each subsystem i to be assessed, and $E$, represents a health index of the subsystem i to be assessed.

5. A health assessment apparatus of an aircraft system, comprising:

an acquisition module configured to acquire operational parameters of a subsystem to be assessed in an aircraft;
a criticality calculation module configured to determine a failure mode corresponding to an abnormal parameter in the operational parameters and determine criticality of the failure mode according to an FMECA assessment result; and
a health condition determination module configured to determine a health condition of the subsystem to be assessed according to criticality of all failure modes in the subsystem to be assessed
an update module configured to, after determining the criticality of the failure mode, determine severity of the failure mode according to the criticality of the failure mode and update the FMECA assessment result according to the severity of the failure mode and/or information related to the failure mode;
the criticality calculation module is specifically configured to:

calculate the criticality of the failure mode by using a preset first formula;
the first formula is:

$$C_{mj} = \lambda_p d_j \beta_j t$$

,

where $j$ is the failure mode, $\lambda_p$ is a failure rate, $d_j$ is a failure mode frequency ratio, $\beta_j$ is a failure effect probability, $t$ is operating time, and $C_{mj}$ is the criticality of the failure mode.

6. An aircraft system, comprising:
a memory and a processor communicatively connected to each other, wherein the memory stores computer instructions, which are executed by the processor to execute the health assessment method for an aircraft system according to any one of claims 1-4.

7. A computer-readable storage medium, which stores instructions configured to cause a computer to execute the health assessment method for an aircraft system according to any one of claims 1-4.

S101

Acquiring operational parameters of a subsystem to be assessed in the aircraft system

S102

Determining a failure mode corresponding to an abnormal parameter in the operational parameters

S103

Determining criticality of the failure mode according to an FMEC A assessment result

S104

Determining a health condition of the subsystem to be assessed according to criticality of all failure modes in the subsystem to be assessed

Fig. 1

Object failure mode analysis

Failure mode severity analysis

Real-time failure data acquisition

Health condition index analysis

Health assessment result

Guiding aircraft operation

Aircraft operation result

Fig. 2

| Acquisition module 20 | Criticality calculation module 22 | Health condition determination module 24 |

| Update module 26 |

Fig. 3

Europäisches
Patentamt

European
Patent Office

Office européen
des brevets

# EUROPEAN SEARCH REPORT

Application Number

EP 22 16 4728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MILI A ET AL: "Dynamic risk management unveil productivity improvements", JOURNAL OF LOSS PREVENTION IN THE PROCESS INDUSTRIES, ELSEVIER, UNITED KINGDOM, vol. 22, no. 1, 1 January 2009 (2009-01-01), pages 25-34, XP025839696, ISSN: 0950-4230, DOI: 10.1016/J.JLP.2008.07.011 [retrieved on 2008-08-12] * abstract * * page 1 – page 7 * | 1-7 | INV. G05B23/02 |
| Y | Anonymous: "Failure mode, effects, and criticality analysis - Wikipedia", , 25 January 2021 (2021-01-25), XP055950159, Retrieved from the Internet: URL:https://web.archive.org/web/2021012505 2712/https://en.wikipedia.org/wiki/Failure _mode,_effects,_and_criticality_analysis [retrieved on 2022-08-09] * page 1 * * page 4 – page 6 * | 1-7 | |
| Y | CN 107 341 314 B (XIAN AVIATION BRAKE TECH CO LTD) 5 January 2021 (2021-01-05) * paragraph [0001] – paragraph [0033] * * paragraph [0102] – paragraph [0130] * * paragraph [0197] * | 1-7 | |

TECHNICAL FIELDS SEARCHED (IPC)

G05B

The present search report has been drawn up for all claims

| Place of search | Date of completion of the search | Examiner |
|---|---|---|
| Munich | 9 August 2022 | Kuntz, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 16 4728**

This annex lists the patent family members relating to the patent documents cited in the above-mentioned European search report.
The members are as contained in the European Patent Office EDP file on
The European Patent Office is in no way liable for these particulars which are merely given for the purpose of information.

**09-08-2022**

| Patent document cited in search report | Publication date | Patent family member(s) | Publication date |
|---|---|---|---|
| CN 107341314 B | 05-01-2021 | NONE | |

EPO FORM P0459

For more details about this annex : see Official Journal of the European Patent Office, No. 12/82